# EUROPÄISCHE PATENTSCHRIFT

(11) **EP 0 861 211 B1**
(45) Veröffentlichungstag und Bekanntmachung des Hinweises auf die Patenterteilung: **25.08.1999**
(21) Anmeldenummer: 96938152.4
(22) Anmeldetag: 07.11.1996
(51) Int. Cl.: C02F 1/52

(54) **VERFAHREN UND VORRICHTUNG ZUR AUFBEREITUNG VON PHOSPHORSÄURE**
PROCESS AND DEVICE FOR THE PREPARATION OF PHOSPHORIC ACIDS
PROCEDE ET DISPOSITIF PERMETTANT DE PREPARER DE L'ACIDE PHOSPHORIQUE

(30) Priorität: 07.11.1995 DE 19541479
(43) Veröffentlichungstag der Anmeldung: 02.09.1998
(73) Patentinhaber: POLIGRAT Holding GmbH, 81829 München (DE)
(72) Erfinder: PIESSLINGER-SCHWEIGER, Siegfried, D-85591 Vaterstetten (DE)
(74) Vertreter: Beyer, Andreas, Dr.
(86) Internationale Anmeldenummer: EP9604891
(87) Internationale Veröffentlichungsnummer: WO9717299

(56) Entgegenhaltungen:
- DATABASE WPI Week 8831 Derwent Publications Ltd., London, GB; AN 88-216171 XP002024890 & JP,A,63 151 398 (EBARA INFILCO) , 23.Juni 1988

## Beschreibung

Die Erfindung betrifft ein Verfahren und eine Vorrichtung zur Aufbereitung von Phosphorsäure, insbesondere von Gemischen von Phosphorsäure. Phosphorsäure und Gemische von Phosphorsäure mit anderen Säuren wie beispielsweise Schwefelsäure fallen in großen Mengen bei der Bearbeitung von metallischen Oberflächen an.

Zum Reinigen, Beizen, Elektropolieren und Dekontaminieren von Metalloberflächen wird vielfach Phosphorsäure in reiner Form oder als Gemisch mit anderen Mineralsäuren wie z.B. Schwefelsäure verwendet. Sie wird dabei sowohl konzentriert, als auch in allen Graden der Verdünnung, sowohl chemisch (stromlos), als auch elektrochemisch unter der Verwendung von Strom eingesetzt. Ziel der Bearbeitung ist die Reinigung der Metalloberflächen durch Beseitigung der Verunreinigungen oder Abtragen der verunreinigten Werkstoffschichten. Das abgetragene Metall und die darin enthaltenen Verunreinigungen gehen dabei weitgehend in der Säure in Lösung und reichern sich in ihr an. Die Metalloberflächen werden nach der Behandlung durch Spülen mit Wasser von den anhaftenden Säureresten gereinigt und getrocknet. Das dabei anfallende Spülwasser enthält Reste der Säuren und die darin gelösten Metallionen und Verunreinigungen.

Die Säuren und Säuregemische verlieren mit zunehmendem Metallgehalt an Wirksamkeit und müssen deshalb ganz oder teilweise durch frische Säure ersetzt werden. Die somit anfallende Abfallsäure und das Spülwasser müssen so aufbereitet werden, daß sie schadlos für die Umwelt entsorgt werden können. Insbesondere müssen die gelösten Schwermetalle in deponiefähige Feststoffe übergeführt werden. Solche Feststoffe sollten neutral bis schwach alkalisch sein und dürfen nicht oder nur gering in Wasser löslich sein.

Nach dem Stand der Technik erfolgt die Aufbereitung derartig verunreinigter Phosphorsäure und Phosphorsäuregemische durch Verdünnen mit Wasser, gefolgt durch Neutralisieren mit Laugen, insbesondere Calciumhydroxid, und Ausfällen der dabei gebildeten Salze und Metallhydroxide. Anschließend werden die Feststoffe vom Wasser durch Sedimentation und Filtration abgetrennt, eingedickt und auf Sondermülldeponien gelagert. Das restliche Wasser enthält die in der Säure und den Spülwässern ursprünglich enthaltenen Schadstoffe in verringerter Konzentration und wird, sofern die Schadstoffkonzentration die jeweils gültigen Grenzwerte nicht überschreitet, an die Umwelt abgegeben, oder einer teilweisen Wiederverwertung zugeführt. Insgesamt stellen jedoch die zu deponierenden festen Abfälle in ihrer Menge meist ein Vielfaches der aufzubereitenden Säure dar.

Eine weitere Möglichkeit zur Regeneration phosphorsäurehaltiger Gemische besteht in der Rückgewinnung der Phosphorsäure durch Flüssig-Flüssig-Extraktion und ihrer anschließenden Wiederverwendung. Ungelöst bleibt dabei das Problem der umweltverträglichen Aufbereitung der verbleibenden übrigen Rest- und Abfallstoffe. Überdies erfordert dieses Verfahren aufwendige und teure Einrichtungen.

Bei der Behandlung radioaktiv verunreinigter Metalloberflächen unter Verwendung von Phosphorsäure und Phosphorsäuregemischen haben die oben genannten Verfahren gravierende Nachteile, da die zur Aufbereitung verwendeten Säuren und Spülwässer anschließend selbst radioaktiv verunreinigt sind.

Die in den Säuren und Spülwässern enthaltenen radioaktiven Verunreinigungen dürfen selbstverständlich nicht frei in die Umwelt gelangen, sondern müssen vollständig und immobilisiert in fester Form einem Endlager für radioaktiven Abfall zugeführt werden. In der Praxis bedeutet dies, daß die Abfälle vor der Lagerung in einem gesonderten Verfahren durch Einbetonieren, Einbitumieren, Fixieren in Ionentauschern oder Verglasen aufwendig konditioniert werden müssen, woraus nochmals eine erhebliche Volumenvermehrung resultiert. Der verfügbare Platz für die Deponie radioaktiver Abfälle ist jedoch begrenzt und die damit verbundenen Kosten sind extrem hoch.

Die Probleme einer den Anforderungen entsprechenden Aufbereitung der bei der elektrochemischen oder chemischen Dekontamination von Metalloberflächen unter Verwendung von Phosphorsäure oder deren Gemischen anfallenden flüssigen Abfälle sind bisher nicht befriedigend gelöst. Daher werden chemische und elektrochemische Dekontaminationsverfahren unter Verwendung von Phosphorsäure und deren Gemischen trotz ihrer hohen Wirksamkeit und einfachen Handhabung kaum eingesetzt.

Aus der DE 39 08 125 A1 ist ein Verfahren bekannt, bei dem Rückstände aus industriellen Fertigungen und insbesondere Rückstände aus Verbrennungsanlagen verfestigt werden. Die verfestigten Produkte können auf Deponien gelagert oder als Baustoffe eingesetzt werden. Dieses Dokument gibt an, daß als Bindemittel zum Zwecke der Verfestigung der Rückstände ein Gemisch aus Alkalisilikat und Alkalialuminat verwendet werden kann, das in fester Form oder ggf. gelöst in Wasser zugesetzt wird. Bei den Rückständen handelt es sich ausweislich sämtlicher Beispiele im wesentlichen um Stäube (d. h. Flugstaub) aus Verbrennungsanlagen.

Die Aufgabe der vorliegenden Erfindung besteht darin, ein Verfahren zur direkten und vollständigen Überführung der Abfallsäuren und Spülwässer einschließlich aller darin enthaltenden Verunreinigungen bereitzustellen, bei dem ein deponiefähiger Feststoff anfällt, so daß daß im Vergleich zum Stand der Technik eine wesentliche Vermehrung des Volumens der Abfallsäure etc. vermieden wird und ohne daß besondere aufwendige Einrichtungen und Anlagen erforderlich werden, die ihrerseits kontaminiert werden können.

Diese Aufgabe ist erfindungsgemäß durch ein Verfahren gelöst, bei dem den phosphorsäurehaltigen Gemischen, wie sie aus der Bearbeitung von Metalloberflächen gewonnen werden, aluminiumhaltige alkalische Lösungen in einer solchen Menge zugegeben werden, daß es zu einer Ausbildung eines Feststoffes kommt. Es wurde überraschenderweise festgestellt, daß die erhaltenen Feststoffe überwiegend wasserunlöslich sind und sich folglich problemlos in Deponien verbringen lassen.

Gegenstand der Erfindung ist somit ein Verfahren zur Aufbereitung und Verfestigung von phosphorsäurehaltigen Lösungen, insbesondere aus der Bearbeitung von Metalloberflächen, wobei die Lösungen, die einen Phosphorsäuregehalt von 10 bis 100 Gew.-% aufweisen, mit alkalischen aluminiumhaltigen Lösungen, die einen Aluminiumgehalt von 1,5 bis 20 Gew.-%, vorzugsweise 4 bis 10 Gew.-%, aufweisen, in einem solchen Verhältnis miteinander vermischt werden, daß sich ein pH-Wert von 5 bis 9 ergibt.

Bei der praktischen Umsetzung der vorliegenden Erfindung hat es sich als günstig erwiesen, ganz bestimmte Grenzkonzentrationen zu beachten. Zugleich ist der pH-Wert so einzustellen, daß er in der sich allmählich verfestigenden Mischung zwischen pH 9 und pH 5, vorzugsweise pH 8 bis pH 6, noch bevorzugter pH 7 bis pH 8, beträgt. Es hat sich als günstig erwiesen, aluminiumhaltige Lösungen einzusetzen, die einen Aluminiumgehalt von 4 bis 10 Gew.-% aufweisen. Das bedeutet, daß in der schließlich erhaltenen Mischung aus Phosphorsäure oder Phosphorsäuregemischen und aluminiumhaltigen Lösungen die Aluminiumkonzentration mindestens etwa 1,5 Gew.-% beträgt. Bevorzugte Aluminiumkonzentrationen sind 4 bis 8 Gew.-%. Für den Phosphorsäuregehalt hat sich eine Konzentration von 40 bis 70 Gew.-% Phosporsäure bewährt. Auch können in der Phosphorsäurelösung bereits Aluminiumgehalte in einer Größenordnung von 0 bis 4 Gew.-% vorliegen.

Als für das erfindungsgemäße Verfahren besonders geeignete phosphorsäurehaltige Säuregemische haben sich solche Gemische erwiesen, die beim chemischen oder elektrochemischen Beizen, Reinigen oder Polieren anfallen, insbesondere aber auch solche Säuregemische, die zum Dekontaminieren von Metalloberflächen eingesetzt wurden. Bei solchen Gemischen ist neben der Phosphorsäure in einer Konzentration von 0 bis 70 Gew.-% auch Schwefelsäure vorhanden. Vorzugsweise liegt die Konzentration der Schwefelsäure in einem Bereich von 15 bis 50 Gew.-%. Eine aluminiumhaltige Lösung, die sich zur Durchführung des Verfahrens ganz besonders eignet, ist eine wäßrige Lösung von Alkalihydroxiden mit einer Konzentration von 1 bis 60 Gew.-%, vorzugsweise 10 bis 40 Gew.-%, Alkalihydroxidgehalt.

Ein ganz besonderer Vorteil der vorliegenden Erfindung liegt darin, daß Abfallösungen aus verschiedenen Metallbearbeitungen, bei denen zum einen saure phosphorsäurehaltige Gemische und zum anderen aluminiumhaltige Lösungen anfallen, problemlos einer Entsorgung zugeführt werden können. Bei einer Vermischung dieser Abfallösungen entsteht, soweit die oben angegebenen Grenzwerte vernünftig eingehalten werden, zunächst eine zähfließende Masse, die allmählich zu einem Feststoff aushärtet. Diese zähfließende Masse läßt sich noch gut in Fässer abfüllen und dann ohne weitere Behandlung in Deponien verbringen. Bei dieser Verfahrensweise bilden sich weder Aerosole noch Stäube, was insbesondere bei radioaktiv verseuchten Abfallösungen von Bedeutung ist.

Die richtigen Volumenproportionen und Konzentrationsanteile von Phosphaten und Aluminiumionen müssen gegebenenfalls mittels einfacher Versuche festgelegt werden. Gegebenenfalls können Erdalkalimetallionen wie Ca⁺⁺ zugesetzt werden, beispielsweise in Form von Calciumaluminat. Die Erdalkalimetallkonzentration liegt dann vorzugsweise im gleichen Bereich wie die Aluminiumkonzentration. Vorzugsweise wird Calciumaluminat eingesetzt.

Nach dem erfindungsgemäßen Verfahren werden die aufzubereitenden Säuren oder Säuregemische durch Zugabe einer alkalischen aluminiumhaltigen Lösung in einen wasserunlöslichen Feststoff überführt, der die Eigenschaft hat, beträchtliche Mengen von Fremdstoffen und Wasser binden zu können. Das Wasser wird als Kristallwasser gebunden. Die Fähigkeit, Wasser zu binden, steigt, wenn vor der Aufbereitung zusätzlich Aluminiumionen in die Phosphorsäure oder das Phosphorsäuregemisch eingebracht werden. Dies kann durch chemische oder anodische Auflösung erfolgen.

Geeignet als Zusätze zur Verfestigung sind Calciumaluminat, Natriumaluminat und Kaliumaluminat oder deren Gemische.

Für die Aufbereitung geht man wie folgt vor:
1. Bei sehr hohem Wassergehalt in der aufzubereitenden Phosphorsäure oder dem phosphorsäurehaltigen Säuregemisch wird dieses zuerst durch Verdampfen von Wasser bis zu einer für die erfindungsgemäße Behandlung geeigneten Konzentration aufkonzentriert und anschließend mit Aluminiumionen angereichert. Dies kann beispielsweise durch anodische Auflösung von Aluminium geschehen. Es hat sich als günstig erwiesen, wenn die Aluminiumkonzentration über 1,5 Gew.-% liegt.
2. Anreichern von Natron- oder Kalilauge mit Aluminium bis zur Sättigung.
3. Zumischen der aluminiumhaltigen Lauge bis pH 8.

Je nach Aluminiumkonzentration, Phosphatgehalt und Wassergehalt im Gemisch verfestigt sich dieses in einem Zeitraum von wenigen Sekunden bis zu einer halben Stunde zu einer mineralischen Substanz. Durch Kontrolle des Wassergehalts der Mischung kann die Zeit bis zum Erstarren so gewählt werden, daß sie in Behälter wie z.B. Fässer abgefüllt werden kann. Der pH-Wert ist vorteilhaft im Bereich von pH 7 bis pH 8 einzustellen. Bei geringem Wassergehalt oder hohem Aluminiumgehalt in Verbindung mit hohem Phosphatgehalt kann die Verfestigung bereits bei niedrigeren pH-Werten eintreten.

Die Reaktion kann stark exotherm sein. Die Temperatur ist vorteilhaft durch die Geschwindigkeit der Zugabe der Komponenten zu steuern. Überschüssiges Wasser kann bis zu einem gewissen Grad durch die Erwärmung bei der Reaktion ausgedampft werden. Des weiteren kann der Wassergehalt und damit das Gewicht der erstarrten Mischung durch Erwärmen nachträglich verringert werden.

Außer auf reine Phosphorsäure wurde das Verfahren auf Gemische von Phosphorsäure und Schwefelsäure angewandt. Dabei hat sich gezeigt, daß es bis zu einem Mischungsverhältnis von Phosphorsäure zu Schwefelsäure von 1 : 3 anwendbar ist.

Die Menge an Wasser, die als Kristallwasser gebunden werden kann, hängt von der im Gemisch vorliegenden Menge an Phosphorsäure ab. Bei zu hohem Wassergehalt sind die Säuregemische vor der Konditionierung durch Eindampfen aufzukonzentrieren. Dabei ist nicht nur der Anteil an freiem Wasser zu berücksichtigen, sondern auch die Wassermenge in der Lauge und diejenige, die bei der Neutralisation der Säure frei wird.

Es zeigte sich, daß die Auslaugbeständigkeit (gemäß DIN 38414) der nach dem vorliegenden Verfahren gewonnenen Feststoffe durchweg hoch ist.

Zur Bearbeitung von Aluminium bietet es sich an, in einem ersten Verfahrensschritt den Metallabtrag durch Beizen in einer Natron- oder Kalilauge durchzuführen und dabei eventuell vorhandene Oxidschichten zu entfernen. Im zweiten Schritt erfolgt eine Elektropolitur in einem Phosphorsäure- oder Phosphorsäure-Schwefelsäure-Elektrolyten. Beide Behandlungslösungen können nach Erreichen einer erhöhten Aluminiumkonzentration mittels des erfindungsgemäßen Verfahrens direkt ohne weitere Zusätze durch Vermischen aufbereitet werden, wobei auch die im Prozeß anfallenden Spülwässer nach Aufkonzentration durch Eindampfen in die Aufbereitung einzubeziehen sind.

Bei der Bearbeitung anderer Metalle wie z.B. Stahl, Edelstahl, Nickel, Kupfer und Beryllium ist die zur Aufbereitung erforderliche Menge Aluminium in das Säuregemisch nachträglich einzubringen. Die Schwermetalle im Gemisch stören die Aufbereitung nicht.

### Beispiele für die Aufbereitung

Verwendet wurden folgende Gemische:

### Gemisch A:

50 Gew.-% Phosphorsäure (85 %-ig) und 46 Gew.-% Schwefelsäure (96 %-ig) mit ca. 4,3 Gew.-% Eisen, 1,1 Gew.-% Chrom, 0,5 Gew.-% Nickel sowie Spuren von Molybdän, Kupfer, Blei, Titan u.a.; Dichte bei 20°C: 1,801 g/cm³.

### Gemisch B:

50 Gew.-% Phosphorsäure (85 %-ig) und 46 Gew.-% Schwefelsäure (96 %-ig) mit ca. 3,5 Gew.-% Eisen, 0,9 Gew.-% Chrom, 0,4 Gew.-% Nickel und 2,4 Gew.-% Aluminium; Dichte bei 20°C: 1,821 g/cm³.

### Gemisch C:

Natronlauge 25 Gew.-% angereichert mit 7,2 Gew.-% Aluminium; Dichte bei 20°C: 1,406 g/cm³.

### Gemisch D:

Kalilauge 30 Gew.-% angereichert mit 5,4 Gew.-% Aluminium; Dichte bei 20°C: 1,491 g/cm³.

### Beispiel 1:

a) Vorlage von 20 g Gemisch A
b) Zugabe von 25,7 g Gemisch D, bis pH 7 erreicht ist. Die Mischung wird fest. Ihr Wassergehalt beträgt 40,8 %.

### Auslaugversuch nach DIN 38414 (1 g in 1 l vollentsalztem Wasser):

| | |
|---|---|
| pH-Wert | 6,55 |
| Leitwert | 643 mS/cm |
| Fe | 0,20 mg/l |
| Cr | 0,04 mg/l |
| Ni | 0,34 mg/l |

### Beispiel 2:

a) Vorlage von 20 g Gemisch A
b) Zugabe von 22,9 g Gemisch C, bis pH 7 erreicht ist. Die Mischung wird fest. Ihr Wassergehalt beträgt 45,3 %.

### Auslaugversuch nach DIN 38414:

| | |
|---|---|
| pH-Wert | 6,84 |
| Leitwert | 678 mS/cm |
| Fe | 0,13 mg/l |
| Cr | 0,02 mg/l |
| Ni | 0,22 mg/l |

### Beispiel 3:

a) Vorlage von 20 g bestehend aus 75 Gew.-% Gemisch A und 25 Gew.-% Wasser
b) Zugabe von 3 g Calciumaluminat
c) Zugabe von 16,6 g Gemisch D, bis pH 7 erreicht ist. Die Mischung wird fest. Ihr Wassergehalt beträgt 43,4 %.

### Auslaugversuch nach DIN 38414:

| | |
|---|---|
| pH-Wert | 6,85 |
| Leitwert | 604 mS/cm |
| Fe | 0,04 mg/l |
| Cr | 0,01 mg/l |
| Ni | 0,46 mg/l |
| Sulfat | 201,4 mg/l |
| Phosphat | 25,0 mg/l |

### Beispiel 4:

a) Vorlage von 20 g Gemisch B
b) Zugabe von 23,9 g Gemisch D bis pH 7. Die Mischung wird fest. Ihr Wassergehalt beträgt 40,3 %.

### Auslaugversuch nach DIN 38414:

| | |
|---|---|
| pH-Wert | 6,23 |
| Leitwert | 582 mS/cm |
| Fe | n.n. |
| Cr | 0,02 mg/l |
| Ni | 0,40 mg/l |
| Sulfat | 207,9 mg/l |
| Phosphat | 13,98 mg/l |

### Beispiel 5:

a) Vorlage von 20 g Gemisch B
b) Zugabe von 24,4 g Gemisch C bis pH 7. Die Mischung wird fest. Ihr Wassergehalt beträgt 45,2 %.

### Auslaugversuch nach DIN 38414:

| | |
|---|---|
| pH-Wert | 6,48 |
| Leitwert | 655 mS/cm |
| Fe | 0,08 mg/l |
| Cr | 0,02 mg/l |
| Ni | 0,41 mg/l |
| Sulfat | 286,4 mg/l |
| Phosphat | 7,52 mg/l |

### Beispiel 6

a) Vorlage 20 g bestehend aus 50 % Mischung B und 50 % Wasser
b) Zugabe von 3 g Calciumaluminat
c) Zugabe von 8,1 g Gemisch D bis pH 7. Die Mischung wird fest. Ihr Wassergehalt beträgt 50,64 %.

### Auslaugversuch nach DIN 38414:

| | |
|---|---|
| pH-Wert | 5,56 |
| Leitwert | 569 mS/cm |
| Fe | 0,10 mg/l |
| Cr | 0,02 mg/l |
| Ni | 0,52 mg/l |
| Sulfat | 255,2 mg/l |
| Phosphat | 7,67 mg/l |

Es zeigt sich, daß die Verfestigung der Säuregemische nach dem erfindungsgemäßen Verfahren schon ohne die noch mögliche, nachträgliche Reduzierung des Wassergehalts zu einer Gewichtszunahme bis maximal zum 1,5-fachen des Gewichts der Säuremischung führt. Die klassische Methode, die Säuregemische aufzubereiten, indem man sie ohne Zusatz von Aluminiumionen zuerst neutralisiert und anschließend durch Zementieren verfestigt, führt demgegenüber abhängig vom eingesetzten Neutraliationsmittel zu einer Gewichtszunahme um den Faktor 12 bis 20.

Im folgenden wird eine Vorrichtung angegeben, die zur Durchführung des oben beschriebenen, erfindungsgemäßen Verfahrens besonders gut geeignet ist. Diese Vorrichtung umfaßt ein Mischrohr, das sich entlang einer Mittellängsachse erstreckt und einen Einlaß sowie einen Auslaß aufweist, wobei der Auslaß vorzugsweise dem Einlaß gegenüberliegt. In den Mischrohreinlaß münden wenigstens zwei Flüssigkeitszufuhrdüsen und mindestens eine Gaszufuhrdüse. Die Flüssigkeitszufuhrdüsen münden bezogen auf den Einlaßquerschnitt in einen zentralen Bereich des Einlasses, während die mindestens eine Gaszufuhrdüse radial außerhalb der wenigstens zwei Flüssigkeitszufuhrdüsen nahe der Mischrohrinnenwand in den Einlaß mündet. Die Längsachse der Gaszufuhrdüse ist so geneigt, daß der Winkel zwischen der Längsachse der Gaszufuhrdüse und der Mittellängsachse des Mischrohres wenigstens etwa 5° beträgt, wobei die Längsachse der Gaszufuhrdüse die Mittellängsachse des Mischrohres nicht schneidet. Die Gaszufuhrdüse bläst also tangential zur Mischrohrinnenwandung in das Mischrohr ein.

Bei einer solchen Vorrichtung wird durch die eine Flüssigkeitszufuhrdüse die phophorsäurehaltige Lösung und durch die andere Flüssigkeitszufuhrdüse die alkalische, aluminiumhaltige Lösung dem Mischrohr zugeführt. Die mindestens eine Gaszufuhrdüse dient zum Einblasen eines Gases, beispielsweise Druckluft, in den Bereich der Mischrohrinnenwand und tangential zur Mittellängsachse des Mischrohres, so daß das Gas das Mischrohr schraubenlinienförmig durchströmt. Der so erzeugte Drall der Gasströmung in dem Mischrohr sorgt dafür, daß die in den Kernbereich des Mischrohres dosiert eingespritzten Flüssigkeiten in Tropfen zerteilt, homogen vermischt und in Richtung auf den Auslaß des Mischrohres transportiert werden. Die bei der Reaktion der beiden eingespritzten Flüssigkeiten auftretende Wärme und der entstehende Wasserdampf werden von dem Gasstrom aufgenommen und kontrolliert abgeführt. Aufgrund der im Mischrohr vorhandenen Verwirbelung bildet sich der bei der Reaktion entstehende Feststoff in Form eines Granulates, das von dem Gasstrom aus dem Mischrohr ausgeblasen wird, ohne die Mischrohrinnenwand in nennenswertem Maß zu berühren. Eine Verstopfung des Mischrohres ist so vermieden und der entstehende Feststoff kann einfach konfektioniert werden.

Die erfindungsgemäße Mischvorrichtung gewährleistet einen kontrollierten, kontinuierlichen und stabilen Mischvorgang, der zu einer konstanten Produktqualität und einem gleichmäßigen Produktaustrag führt. Sie ist bei hoher Leistung klein, handlich und sehr betriebssicher. Darüber hinaus ist sie preiswert in der Herstellung, wartungsarm und im Betrieb kostengünstig, da nur relativ geringe Mengen von unter Druck gesetztem Gas und etwas Strom zum Antrieb der Flüssigkeitsdosierpumpen benötigt werden. Die Flüssigkeitsdosierpumpen brauchen keine teueren Hochdruckpumpen zu sein, es genügen Dosierpumpen, die in einem relativ niedrigen Druckbereich arbeiten.

Gemäß einer bevorzugten Ausführungsform der erfindungsgemäßen Mischvorrichtung münden zwei Gaszufuhrdüsen in den Mischrohreinlaß, wobei der Winkel zwischen der Längsachse jeder Gaszufuhrdüse und der Mittellängsachse des Mischrohres in einem Bereich von zwischen 5° und 60° liegt. Sind mehrere Gaszufuhrdüsen vorhanden, so münden diese bezogen auf den Einlaßquerschnitt des Mischrohres, der vorzugsweise kreisförmig ist, in unterschiedliche Quadranten. Sind zwei Gaszufuhrdüsen vorhanden, so münden sie bevorzugt in diametral gegenüberliegende Quadranten des Einlaßquerschnittes.

Vorteilhaft mündet darüber hinaus jede Gaszufuhrdüse etwas stromaufwärts der Flüssigkeitszufuhrdüsen in den Einlaß des Mischrohres. Mit dem Begriff Einlaß ist vorliegend ein sich axial erstreckender Bereich am Einlaßende des Mischrohres gemeint.

Die zuvor genannten Maßnahmen ergeben eine noch bessere, gleichmäßigere Vermischung der eingespritzten Flüssigkeiten. Beim Vorhandensein mehrerer Gaszufuhrdüsen wirkt es sich günstig aus, wenn diese jeweils an in Umfangsrichtung unterschiedlichen Stellen des Einlaßquerschnittes münden. In jedem Fall sind die Gaszufuhrdüsen jedoch radial außerhalb der Flüssigkeitszufuhrdüsen positioniert und so angeordnet, daß der durch sie eingeblasene Gasstrom tangential zur Mittellängsachse des Mischrohres austritt, so daß das Mischrohr spiralig bzw. schraubenlinienförmig durchströmt wird.

Die Flüssigkeitszufuhrdüsen, deren Anzahl von der Zahl der zu vermischenden Flüssigkeiten abhängt, können so angeordnet sein, daß ihre Längsachsen parallel zur Mittellängsachse des Mischrohres oder leicht dazu geneigt verlaufen, so daß sie die Mittellängsachse im Mischrohr schneiden. Vorzugsweise ist die Neigung der Flüssigkeitszufuhrdüsen bezüglich der Mittellängsachse des Mischrohres geringer als die entsprechende Neigung jeder Gaszufuhrdüse.

Bei allen Ausführungsformen der erfindungsgemäßen Mischvorrichtung ist der Einlaßbereich des Mischrohres bevorzugt kegelförmig erweitert. Diese Maßnahme schafft zum einen genügend Platz für die Zufuhr der verschiedenen Komponenten, sie erzeugt darüber hinaus aber aufgrund der Verengung des Strömungsquerschnitts einen erwünschten Sog in Strömungsrichtung.

In einer vorteilhaften konstruktiven Ausgestaltung der erfindungsgemäßen Mischvorrichtung durchsetzt das Mischrohr eine vorzugsweise kreisscheibenförmige Halteplatte, in der das Mischrohr formschlüssig gehalten ist. Sofern der Einlaßbereich des Mischrohres wie zuvor beschrieben kegelförmig erweitert ist, braucht das Mischrohr nur in eine entsprechend gestaltete Ausnehmung der Halteplatte eingesetzt zu werden, in der es sich dann selbst zentriert. Das Einlaßende des Mischrohres schließt bündig mit der zugehörigen Oberfläche der Halteplatte ab.

Gemäß einer Weiterbildung sind die Flüssigkeitszufuhrdüsen und jede Gaszufuhrdüse in einem zylindrischen Düsenblock ausgebildet oder wenigstens aufgenommen, der auf die zuvor beschriebene Halteplatte aufgesetzt und mit letzterer verspannt ist. Die Gaszufuhrdüsen und die Flüssigkeitszufuhrdüsen können beispielsweise im Material des Düsenblocks direkt durch ein Elektroerodierverfahren ausgebildet werden, alternativ können auch vorgefertigte Düsen in entsprechende Bohrungen des Düsenblocks eingesetzt werden. Falls erforderlich, ist zwischen der Halteplatte und dem Düsenblock eine Dichtung angeordnet. Eine solchermaßen ausgeführte Mischvorrichtung ist sehr stabil und dennoch kompakt sowie leicht zu zerlegen und zu reinigen.

Das Verspannen der Halteplatte mit dem zylindrischen Düsenblock kann beispielsweise mit einer kreisringförmigen Klammer erfolgen, die die Halteplatte und den Düsenblock in Umfangsrichtung umgibt. In bekannter Weise können dabei die Umfangsflächen von Halteplatte und Düsenblock und die Innenumfangsfläche der Klammer so gestaltet sein, daß durch entsprechend geneigte Flächen beim Zusammenschrauben der Klammer eine axial auf die Halteplatte und den Düsenblock wirkende Kraft auftritt, die die beiden zuletzt genannten Teile immer fester gegeneinander drückt.

Die erfindungsgemäße Mischvorrichtung ist unter Bezugnahme auf das Vermischen einer hochkonzentrierten, phosphorsäurehaltigen Flüssigkeit mit einer alkalischen, aluminiumhaltigen Lösung beschrieben worden. Sie ist jedoch nicht auf diesen Einsatz beschränkt, sondern eignet sich zum Vermischen vieler Flüssigkeiten, insbesondere zum Vermischen solcher Flüssigkeiten, bei deren Vermischung eine heftige und stark exotherme Reaktion stattfindet und bei denen darüber hinaus als Ergebnis der Vermischung sich nahezu augenblicklich ein Feststoff bildet. Herkömmliche statische und dynamische Mischer versagen hier, da die rasche Verfestigung des Gemisches die Mischer blockiert und somit keine homogene Vermischung der Reaktionspartner erfolgen kann. Zudem ist eine kontrollierte Wärmeabfuhr aus dem sich schnell verfestigenden Gemisch nicht mehr möglich, so daß es zu lokaler Überhitzung und in Folge zu gefährlichen Explosionen kommen kann.

Ein bevorzugtes Ausführungsbeispiel der erfindungsgemäßen Mischvorrichtung wird im folgenden anhand der beigefügten, schematischen Zeichnungen näher erläutert. Es zeigt:
- Fig. 1: eine Längsschnitt durch eine erfindungsgemäße Mischvorrichtung entlang der Linie I-I in Figur 2, und
- Fig. 2: die Draufsicht II-II aus Figur 1.

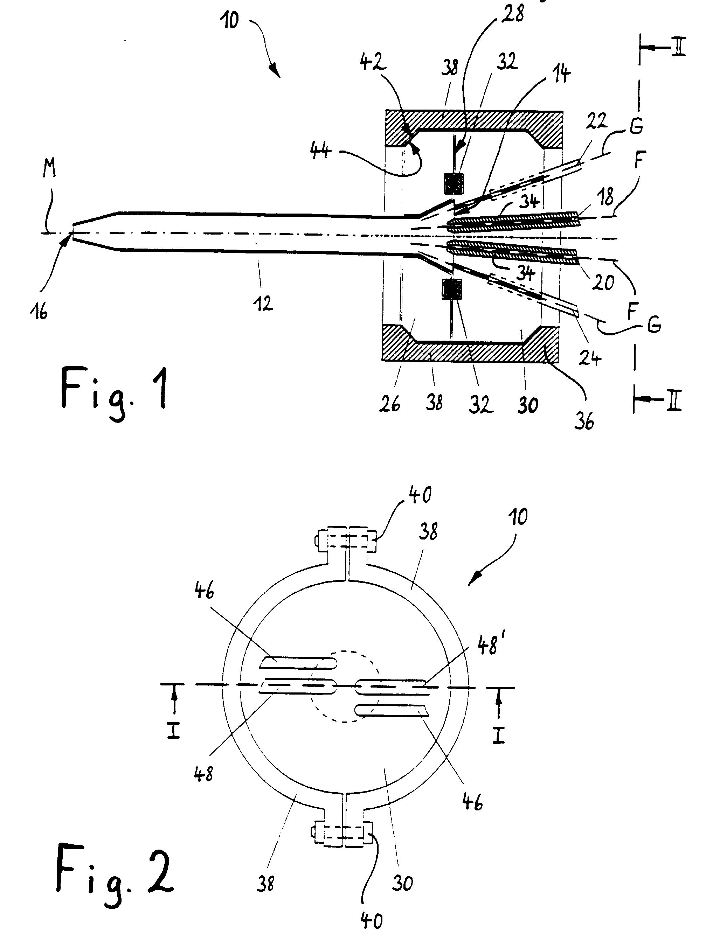

Die in Figur 1 dargestellte und allgemein mit 10 bezeichnete Mischvorrichtung hat ein im wesentlichen zylindrisches Mischrohr 12, das sich längs seiner Mittellängsachse M erstreckt. Das Mischrohr 12 weist einen Einlaß 14 und einen gegenüberliegenden Auslaß 16 auf. Im dargestellten Ausführungsbeispiel ist der Einlaßbereich des Mischrohres 12 kegelförmig erweitert, während sich der Auslaßbereich kegelförmig verjüngt.

In den Einlaß 14 münden zwei Flüssigkeitszufuhrdüsen 18 und 20, durch die die beiden zu vermischenden Flüssigkeiten dem Mischrohr 12 zugeführt werden können. Wie gezeigt, münden die beiden Flüssigkeitszufuhrdüsen 18 und 20 bezogen auf den Einlaßquerschnitt in den zentralen Bereich des Mischrohres 12 und sind gegenüber dessen Mittellängsachse M etwas geneigt, so daß ihre Längsachsen F die Mittellängsachse M stromabwärts schneiden.

Radial außerhalb (siehe auch Figur 2) der beiden Flüssigkeitszufuhrdüsen 18 und 20 münden zwei Gaszufuhrdüsen 22 und 24 in den Mischrohreinlaß 14. Dies Längsachsen G der Gaszufuhrdüsen 22 und 24 sind gegenüber der Mittellängsachse M des Mischrohres 12 in gleicher Weise wie die Längsachsen F geneigt, wobei der zwischen jeder Längsachse G und der Mittellängsachse M eingeschlossene Winkel in einem Bereich von 5° bis 60° liegen kann und bevorzugt einen Wert zwischen 5° und 30° hat. In Figur 1 sind die beiden Gaszufuhrdüsen 22, 24 aus Gründen der zeichnerischen Darstellung in die Schnittebene gelegt worden. Wie aus Figur 2 ersichtlich, sind die Mündungen der beiden Gaszufuhrdüsen 22 und 24 bezogen auf den Mischrohreinlaß 14 in Umfangsrichtung gleichmäßig voneinander beabstandet, so daß sie sich diametral gegenüberliegen.

Im Betrieb der Mischvorrichtung 10 wird durch die Gaszufuhrdüsen 22 und 24 unter Druck gesetztes Gas, beispielsweise Druckluft, in das Mischrohr 12 tangential zu dessen Mittellängsachse M eingeleitet. Es bildet sich daraufhin im Mischrohr 12 eine Spiralströmung aus, die die eingespritzten Flüssigkeiten in feine Tropfen verteilt, homogen vermischt und in Richtung zum Mischrohrauslaß 16 transportiert. Tritt bei der Vermischung der beiden eingespritzten Flüssigkeiten eine stark exotherme und zu einem Festkörper führende Reaktion auf, wird die entstehende Reaktionswärme kontrolliert abgeführt und es bildet sich ein Granulat, das aus dem Mischrohr 12 ausgeblasen wird, ohne es zu verstopfen.

Wie aus Figur 1 ersichtlich, ist das Mischrohr 12 in einer hier kreisscheibenförmigen Halteplatte 26 aufgenommen und durch seinen kegelförmig erweiterten Einlaßbereich in einer entsprechend geformten Ausnehmung der Halteplatte formschlüssig gehalten. Das in Figur 1 rechte Ende des Mischrohres 12 schließt bündig mit der angrenzenden Stirnfläche 28 der Halteplatte 26 ab. Auf die Stirnfläche 28 ist ein kreiszylindrischer Düsenblock 30 gesetzt, der denselben Durchmesser wie die Halteplatte 26 hat und in dem die Flüssigkeitszufuhrdüsen 18 und 20 sowie die Gaszufuhrdüsen 22 und 24 aufgenommen bzw. ausgebildet sind.

Sowohl die Halteplatte 26 als auch der Düsenblock 30 sind aus einem stabilen, druckfesten Material hergestellt, beispielsweise aus rostfreiem Stahl. Zur besseren Abdichtung ist zwischen der Halteplatte 26 und dem Düsenblock 30 nahe dem Mischrohreinlaß 14 eine umlaufende Dichtung 32 angeordnet.

Im gezeigten Ausführungsbeispiel sind die beiden Gaszufuhrdüsen 22 und 24 direkt in dem Material des Düsenblocks 30 ausgebildet, beispielsweise durch Bohren oder durch Elektroerosion. Die beiden Flüssigkeitszufuhrdüsen 18 und 20 hingegen sind in Form separater Einsätze 34 gestaltet, die dicht in den Düsenblock 30 eingefügt werden. Handelt es sich bei den zugeführten Flüssigkeiten um besonders aggressive Medien, müssen auf diese Weise nur die Einsätze 34 aus einem besonders hochwertigen, diesen Medien widerstehenden Material gefertigt werden, während der Düsenblock 30 aus einem preiswerteren Material bestehen kann.

Die Halteplatte 26 und der Düsenblock 30 sind mittels einer hier zweiteiligen, kreisringförmigen Klammer 36 gegeneinander verspannt. Die beiden halbschalenartigen Teile 38 (siehe Figur 2) der Klammer 36 werden durch Schrauben 40 miteinander verbunden. Die Innenseite der beiden Klammerteile 38 und die Umfangsflächen von Halteplatte 26 und Düsenblock 30 sind wie dargestellt mit korrespondierenden, abgeschrägten Flächen 42 und 44 ausgeführt, so daß eine gute Zentrierung und einwandfreie Abdichtung der Halteplatte 26 und des Düsenblocks 30 in bezug aufeinander gewährleistet ist, wenn die Klammer 36 festgezogen wird.

Zum Anschluß der hier nicht dargestellten Gas- und Flüssigkeitszufuhrleitungen ragen aus dem Düsenblock 30 Anschlußstutzen 46 und 48, 48', an denen die entsprechenden Leitungen befestigt werden können.

## Patentansprüche

1. Verfahren zur Aufbereitung und Verfestigung von phosphorsäurehaltigen Lösungen, insbesondere aus der Bearbeitung von Metalloberflächen, wobei die Lösungen, die einen Phosphorsäuregehalt von 10 bis 100 Gew.-% aufweisen, mit alkalischen aluminiumhaltigen Lösungen, die einen Aluminiumgehalt von 1,5 bis 20 Gew.-% aufweisen, in einem solchen Verhältnis miteinander vermischt werden, daß sich ein pH-Wert von 5 bis 9 ergibt.

2. Verfahren nach Anspruch 1, wobei die phosporsäurehaltige Lösung einen Phosphorsäuregehalt von 40 bis 70 Gew.-% aufweist.

3. Verfahren nach Anspruch 1 oder 2, wobei die phosphorsäurehaltige Lösung zusätzlich bis zu 50 Gew.-% Schwefelsäure enthält.

4. Verfahren nach einem der vorstehenden Ansprüche, wobei die alkalische, aluminiumhaltige Lösung 10 bis 40 Gew.-% Alkalihydroxide enthält.

5. Vorrichtung zur Durchführung des Verfahrens gemäß einem der vorhergehenden Ansprüche, mit
- einem Mischrohr (12), das eine Mittellängsachse (M) sowie einen Einlaß (14) und einen insbesondere gegenüberliegenden Auslaß (16) hat,
- wenigstens zwei Flüssigkeitszufuhrdüsen (18 und 20), die in den Mischrohreinlaß (14) und bezogen auf den Einlaßquerschnitt in einen zentralen Bereich desselben münden, und
- mindestens einer Gaszufuhrdüse (22), die ebenfalls in den Einlaß (14) des Mischrohres (12) mündet und die radial außerhalb der wenigstens zwei Flüssigkeitszufuhrdüsen (18, 22) so angeordnet ist, daß ihre Längsachse (G) die Mittellängsachse (M) des Mischrohres (12) nicht schneidet, wobei der Winkel zwischen der Längsachse (G) und der Mittellängsachse (M) wenigstens 5° beträgt.

6. Vorrichtung nach Anspruch 5, dadurch gekennzeichnet, daß zwei Gaszufuhrdüsen (22, 24) in den Mischrohreinlaß (14) münden, wobei der Winkel zwischen der Längsachse (G) jeder Gaszufuhrdüse (22 oder 24) und der Mittellängsachse (M) des Mischrohres (12) in einem Bereich von zwischen 5° und 60°, insbesondere 5° bis 30°, liegt und die beiden Gaszufuhrdüsen (22, 24) bezogen auf den insbesondere kreisförmigen Einlaßquerschnitt des Mischrohres (12) in unterschiedliche Quadranten münden.

7. Vorrichtung nach Anspruch 6, dadurch gekennzeichnet, daß die beiden Gaszufuhrdüsen (22, 24) in diametral gegenüberliegende Quadranten des Einlaßquerschnittes münden.

8. Vorrichtung nach einem der Ansprüche 5 bis 7, dadurch gekennzeichnet, daß jede Gaszufuhrdüse (22, 24) etwas stromaufwärts der Flüssigkeitszufuhrdüsen (18, 20) in den Einlaß (14) des Mischrohres (12) mündet.

9. Vorrichtung nach einem der Ansprüche 5 bis 8, dadurch gekennzeichnet, daß die Längsachsen (F) der Flüssigkeitszufuhrdüsen (18, 20) parallel zur Mittellängsachse (M) oder leicht zur Mittellängsachse (M) geneigt verlaufen, derart, daß sie die Mittellängsachse (M) des Mischrohres (12) innerhalb desselben schneiden.

10. Vorrichtung nach einem der Ansprüche 5 bis 9, dadurch gekennzeichnet, daß der Einlaßbereich des Mischrohres (12) kegelförmig erweitert ist.

11. Vorrichtung nach einem der Ansprüche 5 bis 10, dadurch gekennzeichnet, daß der Auslaßbereich des Mischrohres (12) sich kegelförmig verjüngt.

12. Vorrichtung nach einem der Ansprüche 5 bis 11, dadurch gekennzeichnet, daß das Mischrohr (12) eine vorzugsweise kreisscheibenförmige Halteplatte (26) durchsetzt, in der es formschlüssig gehalten ist, wobei der Beginn des Mischrohres (12) bündig mit der zugehörigen Oberfläche (28) der Halteplatte (26) abschließt.

13. Vorrichtung nach Anspruch 12, dadurch gekennzeichnet, daß jede Gaszufuhrdüse (22, 24) und die Flüssigkeitszufuhrdüsen (18, 20) in einem zylindrischen Düsenblock (30) ausgebildet oder aufgenommen sind, der auf die Halteplatte (26) aufgesetzt und mit letzterer verspannt ist.

14. Vorrichtung nach Anspruch 13, dadurch gekennzeichnet, daß eine kreisringförmige Klammer (36) die Halteplatte (26) und den Düsenblock (30) in Umfangsrichtung umgibt und die genannten Teile miteinander verspannt.

## Claims

1. A method for the conditioning and solidification of phosphoric acid containing solutions, in particular from the processing of metal surfaces, wherein the solutions with a phosphoric acid content of 10 to 100 % by weight are mixed with alkaline aluminium containing solutions with an aluminium content of 1.5 to 20 % by weight in such a proportion that a pH value ranging from 5 to 9 is obtained.

2. A method according to Claim 1, wherein the phosphoric acid containing solution has a phosphoric acid content of 40 to 70 % by weight.

3. A method according to Claim 1 or 2, wherein the phosphoric acid containing solution also contains sulphuric acid of up to 50 % by weight.

4. A method according to one of the previous claims, wherein the alkaline aluminium containing solution contains 10 to 40 % by weight alkali hydroxides.

5. An apparatus for carrying out the method according to one of the previous claims, comprising
- a mixing tube (12) having a longitudinal centre axis (M), an inlet (14) and an outlet (16) preferably arranged opposite the inlet;
- at least two liquid supply nozzles (18 and 20) which open into the mixing tube inlet (14) and, with respect to the inlet cross sectional area, into a central area of same; and
- at least one gas supply nozzle (22) which also opens into the inlet (14) of the mixing tube (12) and which is arranged radially outward from the at least two liquid supply nozzles (18, 20) in such a manner that its longitudinal axis (G) does not intersect the longitudinal centre axis (M) of the mixing tube (12), with the angle between the longitudinal axis (G) and the longitudinal centre axis (M) being at least 5°.

6. An apparatus according to Claim 5, characterized in that two gas supply nozzles (22, 24) open into the mixing tube inlet (14), with the angle between the longitudinal axis (G) of each gas supply nozzle (22 or 24) and the longitudinal centre axis (M) of the mixing tube (12) ranging from 5° to 60°, preferably from 5° to 30°, and the two gas supply nozzles (22, 24) opening into different quadrants with respect to the preferably circular inlet cross sectional area of the mixing tube (12).

7. An apparatus according to Claim 6, characterized in that the two gas supply nozzles (22, 24) open into diametrically opposed quadrants of the inlet cross sectional area.

8. An apparatus according to one of Claims 5 through 7, characterized in that each gas supply nozzle (22, 24) opens into the inlet (14) of the mixing tube (12) slightly upstream of the liquid supply nozzles (18, 20).

9. An apparatus according to one of Claims 5 through 8, characterized in that the longitudinal axes (F) of the liquid supply nozzles (18, 20) extend parallel to the longitudinal centre axis (M) or slightly inclined relative to the longitudinal centre axis (M) in such a manner that they intersect the longitudinal centre axis (M) of the mixing tube (12) inside same.

10. An apparatus according to one of Claims 5 through 9, characterized in that the inlet area of the mixing tube (12) is conically expanded.

11. An apparatus according to one of Claims 5 through 10, characterized in that the outlet area of the mixing tube (12) is conically tapered.

12. An apparatus according to one of Claims 5 through 11, characterized in that the mixing tube (12) penetrates a preferably circular disk-shaped support plate (26) in which is it positively held,with the front end of the mixing tube (12) being aligned-with the associated surface (28) of the support plate (26).

13. An apparatus according to Claim 12, characterized in that each gas supply nozzle (22, 24) and the liquid supply nozzles (18, 20) are formed in or accommodated by a cylindrical nozzle block (30) which is placed on the support plate (26) and clamped with the latter.

14. An apparatus according to Claim 13, characterized in that a circular ring-shaped clamp (36) surrounds the support plate (26) and the nozzle block (30) in a circumferential direction and tightens said parts together.

## Revendications

1. Procédé de traitement et de stabilisation de solutions contenant de l'acide phosphorique, provenant en particulier du traitement de surfaces de métaux, dans lequel les solutions qui ont une teneur en acide phosphorique de 10 à 100 % en poids sont mélangées à des solutions alcalines contenant de l'aluminium, qui présentent une teneur en aluminium de 1,5 à 20 % en poids, dans des proportions telles qu'il en résulte un pH de 5 à 9.

2. Procédé selon la revendication 1, dans lequel la solution contenant de l'acide phosphorique présente une teneur en acide phosphorique de 40 à 70 % en poids.

3. Procédé selon la revendication 1 ou 2, dans lequel la solution contenant de l'acide phosphorique contient de plus jusqu'à 50 % en poids d'acide sulfurique.

4. Procédé selon l'une quelconque des revendications précédentes, dans lequel la solution alcaline contenant de l'aluminium contient de 10 à 40 % en poids d'hydroxyde alcalin.

5. Dispositif pour mettre en oeuvre le procédé selon l'une quelconque des revendications précédentes, comprenant
- un tube mélangeur (12) qui possède un axe longitudinal central (M) ainsi qu'une entrée (14) et une sortie (16) en particulier opposée,
- au moins deux buses d'alimentation en liquide (18 et 20) qui débouchent dans l'entrée du tube mélangeur (14) et dans une zone centrale de celle-ci par rapport à la section d'entrée,
- au moins une buse d'alimentation en gaz (22) qui débouche également dans l'entrée (14) du tube mélangeur (12) et qui est disposée radialement à l'extérieur des au moins deux buses d'alimentation en liquide (18, 22) de telle façon que son axe longitudinal (G) ne coupe pas l'axe longitudinal central (M) du tube mélangeur (12), l'angle entre l'axe longitudinal (G) et l'axe longitudinal central (M) se montant à au moins 5°.

6. Dispositif selon la revendication 5, caractérisé en ce que deux buses d'alimentation en gaz (22, 24) débouchent dans l'entrée (14) du tube mélangeur, l'angle entre l'axe longitudinal (G) de chaque buse d'alimentation en gaz (22 ou 24) et l'axe longitudinal central (M) du tube mélangeur (12) se situant dans une plage comprise entre 5° et 60°, plus particulièrement 5° à 30° et les deux buses d'alimentation en gaz (22 , 24) débouchent dans des quadrant différents par rapport à la section d'entrée en particulier circulaire du tube mélangeur (12).

7. Dispositif selon la revendication 6, caractérisé en ce que les deux buses d'alimentation en gaz (22, 24) débouchent dans des quadrants diamétralement opposés de la section d'entrée.

8. Dispositif selon l'une quelconque des revendications 5 à 7, caractérisé en ce que chaque buse d'alimentation en gaz (22, 24) débouche un peu en amont des buses d'alimentation en liquide (18, 20) dans l'entrée (14) du tube mélangeur (12).

9. Dispositif selon l'une quelconque des revendications 5 à 8, caractérisé en ce que les axes longitudinaux (F) des buses d'alimentation en liquide (18, 20) s'étendent parallèlement à l'axe longitudinal central (M) ou légèrement inclinés par rapport à l'axe longitudinal central (M), de telle façon qu'ils coupent l'axe longitudinal central (M) du tube mélangeur (12) à l'intérieur de celui-ci.

10. Dispositif selon l'une quelconque des revendications 5 à 9, caractérisé en ce que la zone d'entré du tube mélangeur (12) est élargie en forme de cône.

11. Dispositif selon l'une quelconque des revendications 5 à 10, caractérisé en ce que la zone de sortie du tube mélangeur (12) se rétrécit en forme de cône.

12. Dispositif selon l'une quelconque des revendications 5 à 11, caractérisé en ce que le tube mélangeur (12) traverse une plaque de maintien (26) de préférence en forme de disque dans lequel il est maintenu par liaison mécanique, le début du tube mélangeur (12) étant à la même hauteur que la surface (28) associée de la plaque de maintien (26).

13. Dispositif selon la revendication 12, caractérisé en ce que chaque buse d'alimentation en gaz (22, 24) et les buses d'alimentation en liquide (18, 20) sont formées ou logées dans un bloc de buses cylindrique (30) qui est posé sur la plaque de maintien (26) et est serré avec cette dernière.

14. Dispositif selon la revendication 13, caractérisé en ce qu'une bride circulaire (36) entoure la plaque de maintien (26) et le bloc de buses (30) dans la direction périphérique et serre entre elles les pièces citées.
